# EUROPÄISCHE PATENTANMELDUNG

(11) **EP 1 611 993 A1**
(43) Veröffentlichungstag der Anmeldung: **04.01.2006**
(21) Anmeldenummer: 05012618.4
(22) Anmeldetag: 13.06.2005
(51) Int. Cl.: B23P 19/00, B65D 5/50, B25H 3/00, E05D 11/00, B65D 73/02

(54) **Halter für Bänder**

(30) Priorität: 30.06.2004 DE 102004031696
(71) Anmelder: SFS intec Holding AG, 9435 Heerbrugg (CH)
(72) Erfinder: Politi, Sandro, 33074 Fontanafredda (PN) (IT)

(57) **Zusammenfassung**

Beschrieben ist ein Halter (10) zum ausgerichteten Halten einer Vielzahl von Bändern für Türen oder Fester mit jeweils einer zylindrischen Bandrolle. Der Halter hat einen Trägerstreifen (24) aus einem wenigstens teilweise elastischen Material, der mit einer Reihe von zinnenartigen Vorsprüngen (26) versehen ist, zwischen denen schlitzartige Öffnungen (32) gebildet sind, die die Bandrollen form- und/oder kraftschlüssig aufnehmen. Der Trägerstreifen (24) ist ein flächiges Material, das zu einem einstückigen Hohlkörper verformt ist. Vorzugsweise wird der Halter (10) aus Kunststofffolie als ein Blister hergestellt.

## Beschreibung

Die Erfindung betrifft einen Halter zum ausgerichteten Halten einer Vielzahl von Bändern für Türen oder Fenster mit jeweils einer zylindrischen Bandrolle, die einen Bandzapfen oder einen Sitz für einen Bandzapfen enthält und an einem Bandlappen angebracht ist, wobei der Halter einen langgestreckten Trägerstreifen mit einer Vielzahl von Öffnungen zum Halten der Bänder hat.

Ein Halter dieser Art, der aus der EP 0 623 418 B1 bekannt ist, ist für Bänder des Typs Anuba bestimmt. Bei diesem Bandtyp enthält die Bandrolle des einen Bandes einen Bandzapfen und die Bandrolle des anderen Bandes einen Sitz, der den Bandzapfen drehbar aufnimmt, und jedes Band weist einen radial abstehenden Gewindeschaft auf. Diese Bänder werden auf einer automatischen Montageanlage in Türen oder Fenster oder in deren Zargen montiert. Zu diesem Zweck entnimmt eine automatische Banddrehvorrichtung die Bänder aus einem Magazin und dreht die Gewindeschäfte der Bänder jeweils in ein entsprechendes Loch ein, das in dem Fenster, der Tür oder deren Zarge gebildet ist. Eine Bedienungsperson muss zuvor das Magazin gefüllt haben. Dafür dient der bekannte Halter, der eine Vielzahl von Bändern enthält und den die Bedienungsperson ergreift und in das Magazin der Banddrehvorrichtung einführt, woran anschließend der Halter, der ein aus einem Trägerstreifen aus Pappe durch mehrfaches Falzen gebildeter Hohlkörper ist, abgerissen werden kann, um die Gewindeschäfte freizulegen, mit denen die Bänder in Öffnungen des Hohlkörpers ausgerichtet gehalten sind. Zur Herstellung des Halters muß zuvor der langgestreckte Trägerstreifen, nachdem er mit passenden Öffnungen für die Gewindeschäfte versehen worden ist, geritzt und gefalzt werden, damit Paare von Öffnungen in eine geeignete gegenseitige Lage gebracht werden, in der die Gewindeschäfte in übereinanderliegende Öffnungen eingeführt werden können. Die Herstellung des Halters ist aufwendig und arbeitsintensiv. Darüber hinaus ist der bekannte Halter nur für Bänder des Anuba-Typs geeignet, die radial abstehende Gewindeschäfte aufweisen.

Ein aus der US 4 014 488 A bekannter Halter für Befestiger ist als ein Magazinierstreifen ausgebildet, der von seinen Längsrändem paarweise parallel nach oben vorstehende Laschen hat, in denen einander gegenüberliegende Öffnungen gebildet sind, die paarweise jeweils einen der Befestiger aufnehmen. Der Magazinierstreifen wird aus einem Magazin schrittweise einem Antriebskopf eines Kraftschraubers zugeführt, der die Befestiger quer zur Längsrichtung des Magazinierstreifens in ein Werkstück einschraubt und dabei die Befestiger aus den Laschen hinausdrückt. Dieser bekannte Magazinierstreifen ist für Bänder für Türen oder Fenster mit jeweils einer zylindrischen Bandrolle, die einen Bandzapfen oder einen Sitz für einen Bandzapfen enthält und an einem Bandlappen angebracht ist, also keinen abstehenden Gewindeschaft wie der vorgenannte bekannte Halter aufweist, weder vorgesehen noch geeignet. Durch die zwischen den Laschen vorgesehenen Schlitze, die die Laschen voneinander trennen und bis zu den Längsrändern des Magazinierstreifens reichen, wäre der Magazinierstreifen zu biegsam, um Bänder für Türen oder Fenster, die wesentlich schwerer als übliche Befestiger sind, aufnehmen zu können. Selbst wenn es gelänge, Bänder der vorgenannten Art in paarweise gegenüberliegende Laschen einzusetzen und darin ausgerichtet zu halten, wäre das nicht einfach zu bewerkstelligen und es wäre auch nicht einfach, die Bänder in einer Montageanlage wieder aus den Laschen zu entnehmen.

Aufgabe der Erfindung ist es, einen Halter der eingangs genannten Art zu schaffen, der einfach und kostengünstig herstellbar ist und mit dem sich Bänder ohne radial abstehenden Gewindezapfen, bei denen die zylindrische Bandrolle an einem parallelen Bandlappen angebracht ist, ausgerichtet halten und in ein Magazin einer Montageanlage einfüllen lassen.

Diese Aufgabe ist erfindungsgemäß bei einem Halter der eingangs genannten Art dadurch gelöst, dass der Trägerstreifen aus einem wenigstens teilweise elastischen Material besteht und mit einer Reihe von zinnenartigen Vorsprüngen versehen ist, zwischen denen schlitzartige Öffnungen gebildet sind, die die Bandrollen form- und/oder kraftschlüssig aufnehmen, und dass der Trägerstreifen um eine Achse, die quer zu seiner Längserstreckung ist, ausreichend elastisch biegsam ist, um durch Aufweiten der schlitzartigen Öffnungen das Aufnehmen und/oder Entnehmen der Bandrollen zu gestatten.

Der erfindungsgemäße Halter ist wesentlich weniger aufwendig als der bekannte Halter herstellbar, befüllbar und entleerbar, da er als ein langgestreckter Trägerstreifen mit einer Reihe von zinnenartigen Vorsprüngen ausgebildet ist. Die Bänder werden mit ihren Bandrollen einfach in die zwischen den zinnenartigen Vorsprüngen gebildetenschlitzartigen Öffnungen eingeklippst. Da bei dem Halter nach der Erfindung durch Biegen um eine Achse, die quer zu seiner Längserstreckung ist, die schlitzartigen Öffnungen aufgeweitet werden können, brauchen die parallel zueinander in dem erfindungsgemäßen Halter gehaltenen Bänder dann lediglich in einen Kanal eines Magazins der Montageanlage eingeführt zu werden, woraufhin der Halter radial von den Bandrollen abgezogen werden kann, die ihre montagegerechte Lage in dem Magazin beibehalten. Es lassen sich aber auch die Bandrollen beispielsweise bequem Band für Band in Einzelaufnahmen eines Magazins einfüllen, im Gegensatz zu der zuvor beschriebenen Möglichkeit des Einfüllens in ein kanalartiges Magazin, welches die Bänder zurückhält, so dass der Trägerstreifen radial von den Bandrollen abgezogen werden kann. Der erfindungsgemäße Halter ermöglicht so ein rationelles Befüllen des Magazins der Montageanlage, das ohne weiteres auch automatisiert erfolgen kann. Zeit und Personalaufwand werden dadurch gesenkt, die Bänder, die üblicherweise lackiert sind, werden schonend gehandhabt, und die Taktzeit der Montageanlage lässt sich reduzieren, weil das Befüllen des Magazins mit Hilfe des erfindungsgemäßen Halters wesentlich schneller vonstatten geht als das Befüllen von Hand mit dem aus der EP 0 623 418 B1 bekannten Halter, der aus Pappe besteht und nur eine geringere Zahl von Bändern als der erfindungsgemäße Halter aufnehmen kann. Darüber hinaus kann dieser bekannte Halter nur einmal verwendet werden und muss nach Gebrauch entsorgt werden.

Der Begriff "zinnenartige" Vorsprünge ist hier gewählt worden, weil die Reihe von Vorsprüngen an Zinnen erinnert. Zinnen sind an Wehrgängen oder den Mantelmauern von Burgen sowie an Stadtmauern errichtete pfeilerartige Schutzmauern, als Brustwehr in verschiedenen Formen, z. B. als Rechteckzinnen (Meyers Enzyklopädisches Lexikon, Bibliographisches Institut Mannheim/Wien/Zürich, Band 25, S. 731, 1979). Der mit den zinnenartigen Vorsprüngen versehene Trägerstreifen des Halters nach der Erfindung hat, um einen anderen anschaulichen beschreibenden Begriff zu verwenden, die Form einer Zahnstange. Es liegt auf der Hand, daß es für die Herstellung eines solchen zahnstangenartigen Gebildes viele Möglichkeiten der spanlosen Fertigung gibt, die wesentlich einfacher realisierbar sind als die Herstellung aus einem mehrfach zu falzenden und mit Löchern zu versehenden Kartonstreifen. Überdies kann der Halter nach der Erfindung von den in ihm gehaltenen Bändern getrennt werden, ohne dass der Halter dabei beschädigt wird, so dass der erfindungsgemäße Halter wiederverwendbar ist.

Vorteilhafte Ausgestaltungen des Halters nach der Erfindung bilden die Gegenstände der Unteransprüche.

Wenn in einer Ausgestaltung des Halters nach der Erfindung die Dicke der Vorsprünge quer zur Längserstreckung des Trägerstreifens wenigstens doppelt so groß wie der Außendurchmesser einer Bandrolle ist, ist gewährleistet, dass die Bänder ausreichend sicher und gegenseitig parallel bis zum Einfüllen in ein Magazin gehalten werden.

Wenn in einer weiteren Ausgestaltung des Halters nach der Erfindung die Teilung der Vorsprünge im wesentlichen gleich der Höhe des Halters ist, lassen sich eine ausreichende Steifigkeit des Halters und eine ausreichende Festigkeit der zinnenartigen Vorsprünge bei minimalem Materialeinsatz erzielen.

Wenn in einer weiteren Ausgestaltung des Halters nach der Erfindung sich die schlitzartigen Öffnungen am Grund jeweils zu einer zylindrischen Öffnung erweitern, deren Durchmesser dem Außendurchmesser einer Bandrolle angepasst ist, ist die Halterung der Bänder sicherer, als wenn die Bandrollen lediglich zwischen parallelen Wänden der Vorsprünge eingeklemmt werden.

Wenn in einer weiteren Ausgestaltung des Halters nach der Erfindung sich die zylindrische Öffnung am Grund jeder schlitzartigen Öffnung über einen Winkel von etwa 270° erstreckt und symmetrisch in zwei parallele Wände übergeht, deren lichter Abstand kleiner als der Durchmesser der zylindrischen Öffnung ist, sind die Bandrollen in die schlitzartigen Öffnungen leicht einführbar und in denselben besonders sicher haltbar.

Wenn in einer weiteren Ausgestaltung des Halters nach der Erfindung die zwischen der Oberseite der zinnenartigen Vorsprünge und dem Grund der zylindrischen Öffnung gemessene Höhe jeder schlitzartigen Öffnung etwa gleich der über die Bandrolle und einen Lappen, an dem die Bandrolle angebracht ist, gemessenen Dicke eines Bandes ist, ist nicht nur eine sichere Halterung der Bänder gewährleistet, sondern auch ein einfaches Einführen der Bänder mit Hilfe des Halters in einen Aufnahmeschlitz des Magazins einer Montageanlage.

Wenn in einer weiteren Ausgestaltung des Halters nach der Erfindung die parallelen Wände an dem freien Ende jeder schlitzartigen Öffnung auf einer Höhe, die im wesentlichen gleich der Dicke des Lappens ist, derart zurückgesetzt sind, dass ihr lichter Abstand größer als die Breite des Lappens ist, erfolgt die Halterung der Bänder in dem Halter definiert nur im Bereich der Bandrollen und nicht im Bereich der Lappen.

Wenn in einer weiteren Ausgestaltung des Halters nach der Erfindung jeder Vorsprung in sich ausreichend elastisch nachgiebig ist, um das Aufnehmen und/oder Entnehmen der Bandrollen zu gestatten, kann beispielsweise der Trägerstreifen, an dem die zinnenartigen Vorsprünge angebracht oder angeformt sind, steif ausgebildet sein, so dass sich längere Halter zur Aufnahme von mehr Bändern herstellen lassen.

Wenn in einer weiteren Ausgestaltung des Halters nach der Erfindung der Trägerstreifen einen allseits über die Reihe von zinnenartigen Vorsprüngen überstehenden Rand aufweist, lassen sich das Einführen des Halters in ein kanalartiges Magazin und die Steifigkeit des Halters je nach Gebrauchszweck optimieren.

Wenn in einer weiteren Ausgestaltung des Halters nach der Erfindung der Trägerstreifen mit einer in Längsrichtung über die Reihe von zinnenartigen Vorsprüngen überstehenden Zunge versehen ist, lässt sich der Halter an dieser Zunge ergreifen und leichter von den Bandrollen in einem Magazin abziehen.

Wenn in einer weiteren Ausgestaltung des Halters nach der Erfindung der Trägerstreifen ein flächiges oder quaderförmiges Gebilde ist, an dem die zinnenartigen Vorsprünge angeformt sind, lässt sich der Halter auf einfache Weise durch ein geeignetes nichtspanendes Verfahren herstellen.

Wenn in einer weiteren Ausgestaltung des Halters nach der Erfindung der Trägerstreifen ein flächiges Material ist, das zu einem einstückigen Hohlkörper verformt ist, bieten sich besonders einfache Herstellungsmöglichkeiten, beispielsweise durch Tiefziehen, Pressen, Blasformen od.dgl.

Wenn in einer weiteren Ausgestaltung des Halters nach der Erfindung dieser aus Kunststofffolie als ein Blister hergestellt ist, können ein heute in der Verpackungstechnik übliche Verfahren zum Einsatz kommen.

Ausführungsbeispiele der Erfindung werden im folgenden unter Bezugnahme auf die Zeichnungen näher beschrieben. Es zeigt:
- Fig. 1: in Draufsicht einen Halter nach der Erfindung,

- Fig. 2: den Halter in einer Längsschnittansicht nach der Linie II-II in Fig. 1,
- Fig. 3: den Halter in einer Querschnittansicht nach der Linie III-III in Fig. 1,
- Fig. 4: ein Detail X des in Fig. 2 dargestellten Halters in größerem Maßstab,
- Fig. 5: in perspektivischer Darstellung eine Ansicht der Unterseite des Halters,
- Fig. 6: in perspektivischer Darstellung eine Ansicht der Oberseite des Halters und
- Fig. 7: ein bekanntes Magazin einer Montageanlage, das zur Aufnahme einer Vielzahl von Bändern für Türen oder Fenster mit jeweils einer zylindrischen Bandrolle bestimmt ist, wobei nur ein solches Band gezeigt ist.

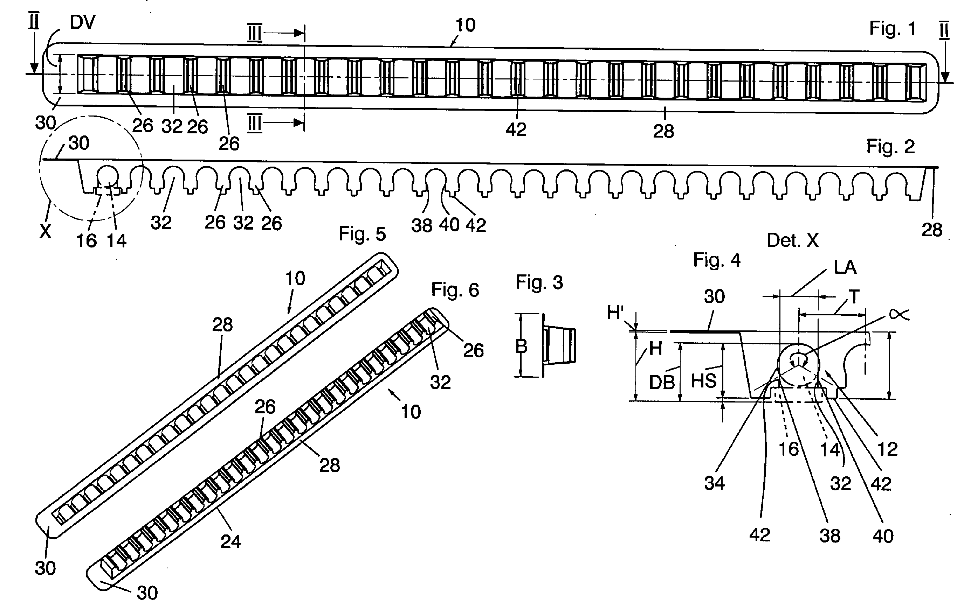

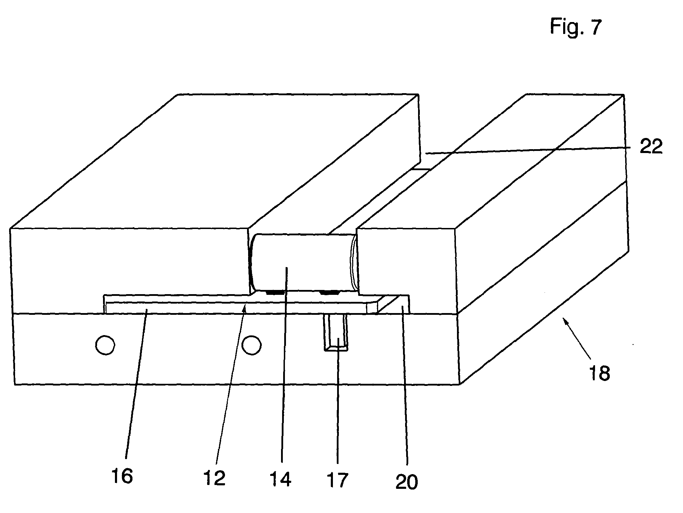

Ein Ausführungsbeispiel eines insgesamt mit 10 bezeichneten Halters nach der Erfindung wird im folgenden unter Bezugnahme auf die Fig. 1-6 beschrieben. Der Halter 10 dient zum ausgerichteten Halten einer Vielzahl von Bändern für Türen oder Fenster mit jeweils einer zylindrischen Bandrolle, die einen Bandzapfen oder einen Sitz für einen Bandzapfen, welche nicht dargestellt sind, enthält. Ein solches Band 12 ist in Fig. 7 gezeigt und in den Fig. 2 und 4 jeweils in einer Stirnseitenansicht angedeutet. Das Band 12 hat eine zylindrische Bandrolle 14 und einen Lappen 16, die miteinander verschweißt sind. Der Lappen 16 hat einen nach unten vorstehenden Passstift 17, der für die Montage von Interesse ist und hier nicht weiter beschrieben zu werden braucht. Das gesamte Band 12 ist lackiert und muss bei der Montage schonend gehandhabt werden. Ein in Fig. 7 gezeigtes Magazin 18 ist als eine Zuführschiene aufgebaut, die im Einsatz in der Montageanlage (nicht dargestellt) horizontal oder vertikal angeordnet ist. Das Magazin 18 weist einen breiten, niedrigen Kanal 20 zur Aufnahme des Lappens 16 jedes Bandes 12 auf, der in einen schmaleren, höheren und in Fig. 7 vorn und hinten und nach oben offenen Schlitz 22 mündet, welcher die Bandrolle 14 jedes Bandes 12 aufnimmt.

Der Halter 10 besteht aus einem langgestreckten Trägerstreifen 24, der in dem dargestellten Ausführungsbeispiel ein flächiges Gebilde ist, das mit Abstand einwärts von seinen Außenkanten zu einer Reihe von zinnenartigen Vorsprüngen 26 verformt ist. Der Trägerstreifen 24 hat einen allseits über die Reihe von zinnenartigen Vorsprüngen 26 überstehenden Rand 28. Der Halter 10 besteht somit in diesem Ausführungsbeispiel aus dem zu einem einstückigen Hohlkörper verformten Trägerstreifen 24. Die perspektivischen Darstellungen in den Fig. 5 und 6 zeigen den zu einem Hohlkörper verformten Trägerstreifen 24 anschaulich in einer Ansicht von unten bzw. oben. Der Trägerstreifen 24 ist darüber hinaus mit einer in Längsrichtung über die Reihe von zinnenartigen Vorsprüngen 26 überstehenden Zunge 30 versehen.
Die Fig. 1 und 2 zeigen den Halter 10 in Draufsicht bzw. in einer Längsschnittansicht nach der Linie II-II in Fig. 1. Fig. 3 zeigt den Halter in einer Querschnittansicht nach der Linie III-III in Fig. 1. Der Aufbau der zinnenartigen Vorsprünge 26 und von zwischen den zinnenartigen Vorsprüngen gebildeten schlitzartigen Öffnungen 32 lässt sich am anschaulichsten unter Bezugnahme auf Fig. 4 beschreiben, die ein Detail X von Fig. 2 in größerem Maßstab zeigt.

Die schlitzartige Öffnung 32 erweitert sich am Grund zu einer zylindrischen Öffnung 34, deren Durchmesser dem einer Bandrolle 14 angepasst ist. Die Teilung der Vorsprünge 26, in Fig. 4 mit T bezeichnet, ist im Wesentlichen gleich der Höhe des Halters 10, in Fig. 4 mit H bezeichnet. Genau genommen kommt zu der Höhe H noch die Dicke des elastischen Materials hinzu, in Fig. 4 mit H' bezeichnet. In dem dargestellten Ausführungsbeispiel ist das elastische Material eine Kunststofffolie mit einer Dicke von 0,5 mm. Die zylindrische Öffnung 34 am Grund jeder schlitzartigen Öffnung 32 erstreckt sich über einen Winkel α von etwa 270° und geht symmetrisch in zwei parallele Wände 38, 40 über, deren lichter Abstand, in Fig. 4 mit LA bezeichnet, kleiner als der Durchmesser der zylindrischen Öffnung 34 ist. Die zwischen der Oberseite der zinnenartigen Vorsprünge, in Fig. 4 mit 42 bezeichnet, und dem Grund der zylindrischen Öffnung 34 gemessene Höhe jeder schlitzartigen Öffnung 32, in Fig. 4 mit HS bezeichnet, ist etwa gleich der über die Bandrolle 14 und den Lappen 16, an dem die Bandrolle angebracht ist, gemessenen Dicke des Bandes 12, in Fig. 4 mit DB bezeichnet. In dem hier beschriebenen Ausführungsbeispiel ist die Dicke DB des Bandes 12 um 0,5 mm größer als die Höhe HS der schlitzartigen Öffnung, so dass das in den Halter 10 eingesetzte Band 12 um 0,5 mm über die Oberseite 42 des Halters 10 übersteht. Wenn bei der Montage der Halter 10 mit den eingesetzten Bändern 12 in den Schlitz 22 des Magazins 18 eingeführt wird, kommen deshalb die Bänder mit der Unterseite ihrer Lappen 16 auf der Sohle des Kanals 20 zu liegen. Weiter sind gemäß der Darstellung in Fig. 4 die parallelen Wände 38, 40 an dem freien Ende der schlitzartigen Öffnung 32 auf einer Höhe, die im wesentlichen gleich der Dicke des Lappens 16 ist, derart zurückgesetzt, dass ihr lichter Abstand größer als die Breite des Lappens ist.

Gemäß der Darstellung in den Fig. 1-3 ist die Dicke der zinnenartigen Vorsprünge 26, in Fig. 1 mit DV bezeichnet, quer zur Längserstreckung des Trägerstreifens 24 etwa mehr als doppelt so groß wie der Außendurchmesser einer Bandrolle 14, so dass jedes Band zwischen zwei benachbarten Vorsprüngen 26 zur sicheren Halterung auf einer ausreichend großen Länge gehalten wird. Jeder Vorsprung 26 ist in sich ausreichend elastisch nachgiebig, um das Aufnehmen und/oder Entnehmen der Bandrollen 14 zu gestatten, indem der Halter 10 in der Darstellung in Fig. 7 von den Bandrollen 14 radial nach oben abgezogen wird. Zu diesem Zweck wird der Halter 10 an der Zunge 30 ergriffen.

In dem hier dargestellten Ausführungsbeispiel ist der Halter 10 aus Kunststofffolie als ein Blister hergestellt, also durch ein Verfahren, wie es in der Verpackungstechnik zur Herstellung von Blisterverpackungen angewandt wird. Aufgrund des hohlkörperartigen Aufbaus mit dem umlaufenden Rand 28 hat der Halter 10 in Längsrichtung eine ausreichende Steifigkeit, um bei dem hier beschriebenen Ausführungsbeispiel fünfundzwanzig Bänder 12 aufzunehmen und ausgerichtet zu halten. Dabei hat der Halter 10 bei dem hier beschriebenen Ausführungsbeispiel eine Gesamtlänge, einschließlich des Randes 28 und der Zunge 30, von 550 mm, bei einer Gesamtbreite B (Fig. 3) von 38 mm.

Im Rahmen der Erfindung könnte der gemäß obiger Beschreibung zu einem Hohlkörper verformte Trägerstreifen 24 statt dessen auch mit aufgesetzten zinnenartigen Vorsprüngen versehen werden oder mit zinnenartigen Vorsprüngen gemeinsam durch Spritzgießen od.dgl. als ein einstückiger massiver Körper hergestellt werden. Es sind auch alle Kombinationen dieser verschiedenen Verfahren denkbar.

## Patentansprüche

1. Halter zum ausgerichteten Halten einer Vielzahl von Bändern für Türen oder Fenster mit jeweils einer zylindrischen Bandrolle, die einen Bandzapfen oder einen Sitz für einen Bandzapfen enthält,
wobei der Halter einen langgestreckten Trägerstreifen mit einer Vielzahl von Öffnungen zum Halten der Bänder hat,
**dadurch gekennzeichnet, dass** der Trägerstreifen (24) aus einem wenigstens teilweise elastischen Material besteht und mit einer Reihe von zinnenartigen Vorsprüngen (26) versehen ist, zwischen denen schlitzartige Öffnungen (32) gebildet sind, die die Bandrollen (14) form- und/oder kraftschlüssig aufnehmen, und dass der Trägerstreifen (24) um eine Achse, die quer zu seiner Längserstreckung ist, ausreichend elastisch biegsam ist, um durch Aufweiten der schlitzartigen Öffnungen (32) das Aufnehmen und/oder Entnehmen der Bandrollen (14) zu gestatten.

2. Halter nach Anspruch 1, **dadurch gekennzeichnet, dass** die Dicke (DV) der Vorsprünge (26) quer zur Längserstreckung des Trägerstreifens (24) wenigstens doppelt so groß wie der Außendurchmesser einer Bandrolle (14) ist.

3. Halter nach Anspruch 1 oder 2, **dadurch gekennzeichnet, dass** die Teilung der Vorsprünge (26) im wesentlichen gleich der Höhe (H) des Halters (10) ist.

4. Halter nach einem der Ansprüche 1 bis 3, **dadurch gekennzeichnet, dass** sich die schlitzartigen Öffnungen (32) am Grund jeweils zu einer zylindrischen Öffnung (34) erweitern, deren Durchmesser dem Außendurchmesser einer Bandrolle (14) angepasst ist.

5. Halter nach Anspruch 4, **dadurch gekennzeichnet, dass** sich die zylindrische Öffnung (34) am Grund jeder schlitzartigen Öffnung (32) über einen Winkel von etwa 270° erstreckt und symmetrisch in zwei parallele Wände (38, 40) übergeht, deren lichter Abstand (LA) kleiner als der Durchmesser der zylindrischen Öffnung (34) ist.

6. Halter nach Anspruch 5, **dadurch gekennzeichnet, dass** die zwischen der Oberseite (42) der zinnenartigen Vorsprünge (26) und dem Grund der zylindrischen Öffnung (34) gemessene Höhe (HS) jeder schlitzartigen Öffnung (32) etwa gleich der über die Bandrolle (14) und einen Lappen (16), an dem die Bandrolle (14) angebracht ist, gemessenen Dicke (DB) eines Bandes (12) ist.

7. Halter nach Anspruch 6, **dadurch gekennzeichnet, dass** die parallelen Wände (38, 40) an dem freien Ende jeder schlitzartigen Öffnung (32) auf einer Höhe, die im wesentlichen gleich der Dicke des Lappens (16) ist, derart zurückgesetzt sind, dass ihr lichter Abstand größer als die Breite des Lappens (16) ist.

8. Halter nach einem der Ansprüche 1 bis 7, **dadurch gekennzeichnet, dass** jeder Vorsprung (26) in sich ausreichend elastisch nachgiebig ist, um das Aufnehmen und/oder Entnehmen der Bandrollen (14) zu gestatten.

9. Halter nach einem der Ansprüche 1 bis 8, **dadurch gekennzeichnet, dass** der Trägerstreifen (24) einen allseits über die Reihe von zinnenartigen Vorsprüngen (26) überstehenden Rand (28) aufweist.

10. Halter nach einem der Ansprüche 1 bis 9, **dadurch gekennzeichnet, dass** der Trägerstreifen (24) mit einer in Längsrichtung über die Reihe von zinkenartigen Vorsprüngen (26) überstehenden Zunge (30) versehen ist.

11. Halter nach einem der Ansprüche 1 bis 10, **dadurch gekennzeichnet, dass** der Trägerstreifen (24) ein flächiges oder quaderförmiges Gebilde ist, an dem die zinnenartigen Vorsprünge (26) angeformt sind.

12. Halter nach Anspruch 11, **dadurch gekennzeichnet, dass** der Trägerstreifen (24) ein flächiges Material ist, das zu einem einstückigen Hohlkörper verformt ist.

13. Halter nach Anspruch 12, **dadurch gekennzeichnet, dass** der Halter (10) aus Kunststofffolie als ein Blister hergestellt ist.
